Europäisches Patentamt

European Patent Office

Office européen des brevets

(11) Veröffentlichungsnummer: **0 210 484**
A2

## (12) EUROPÄISCHE PATENTANMELDUNG

(21) Anmeldenummer: 86109373.0

(22) Anmeldetag: 09.07.86

(51) Int. Cl.⁴: **A 61 C 9/00**

(30) Priorität: 27.07.85 DE 3526933

(43) Veröffentlichungstag der Anmeldung:
04.02.87 Patentblatt 87/6

(84) Benannte Vertragsstaaten:
CH DE FR GB IT LI

(71) Anmelder: Haker, Gerd
Kleistring 14
D-2359 Henstedt-Ulzburg 3(DE)

(72) Erfinder: Haker, Gerd
Kleistring 14
D-2359 Henstedt-Ulzburg 3(DE)

(74) Vertreter: Glaeser, Joachim, Dipl.-Ing. et al,
Patentanwalt Königstrasse 28
D-2000 Hamburg 50(DE)

(54) Einteilige Form zur Herstellung und Aufnahme eines Kieferabgussarbeitsmodells zur Zahnersatzherstellung.

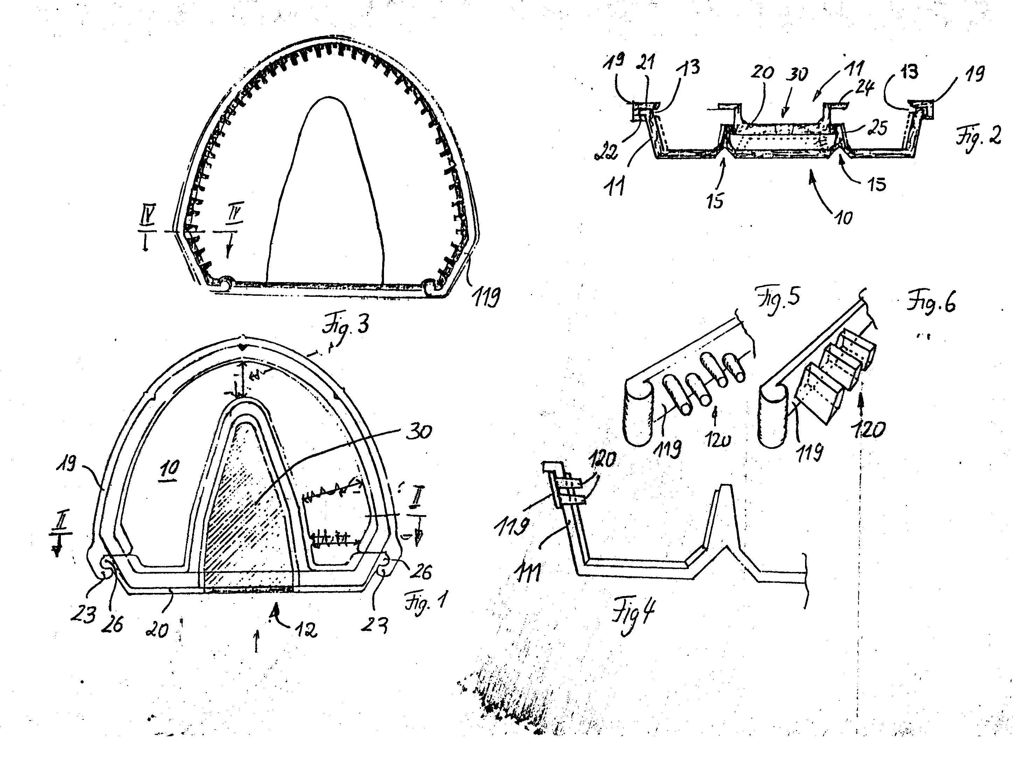

(57) Einteilige Form zur Herstellung und Aufnahme eines Kieferabgußarbeitsmodells zur Zahnersatzherstellung unter Verwendung von mit Retentionsteilen zum Halten des Arbeitsmodells in der Form und Halterippen für das Arbeitsmodell, wobei die Konturen der Form denen eines Arbeitsmodells in etwa angepaßt sind. Der eine Halterungsteil (20) ist mit in den Innenbereich der Form hineinstreckendem zungenartigem Vorsprung (130) mit Flanschen (24, 25) ausgebildet oder aber sind die Retentionsteile (119) in Form von Bändern mit Vorsprüngen (120) ausgebildet und zu den Vorsprüngen (119) (Figur 1) passende Ausnehmungen in der Seitenwand (111) vorgesehen (Figur 1).

Fig. 1

Die Erfindung bezieht sich auf eine einteilige Form zur Herstellung und Aufnahme eines Kieferabgußarbeitsmodells zur Zahnersatzherstellung.

In der einschlägigen Technik sind zahlreiche Formen verschiedenartiger Gestalt und Zusammensetzung zur Aufnahme von Arbeitsmodellen für die Zahnprothesenherstellung bekannt. Für die Herstellung von Zahnersatz wird von dem Oberkiefer oder dem Unterkiefer oder von beiden ein Abdruck oder ein Abguß seitens des Zahnarztes hergestellt, und dieser Abdruck wird dem Zahntechniker für die Fertigstellung von Zahnersatz übersandt. Der Zahntechniker stellt von dem seitens des Zahnarztes hergestellten Abdruck ein Arbeitsmodell her, wobei beispielsweise wie folgt vorgegangen wird: Der Abdruck wird mit Gips ausgefüllt, ferner wird eine Gipsmasse in eine der herzustellenden Modelle in etwa angepaßte Form eingebracht, und vor dem Abhärten des Gipses werden der Gips des Arbeitsmodells und der Gipssockel in der Form aufeinandergedrückt; der überschüssige Gips wird entfernt und nach dem Härten des Gipses werden Arbeitsmodell und fest mit ihm verbundener Sockel aus der Form herausgenommen und weiter bearbeitet.

- 2 -

Für die Herstellung eines Zahnersatzes ist es erforderlich, das Arbeitsmodell und den fest mit ihm verbundenen Sockel in Teile zu zersägen, um an den Teilen des Arbeitsmodells präzise Arbeiten für die Fertigstellung des Zahnersatzes durchführen zu können. Es ist aber notwendig,( insbesondere wenn es sich um Arbeiten für einen Oberkiefer handelt,) die zersägten Teile des Arbeitsmodells genau wieder zusammenzusetzen und in einer Form zu haltern.

Zu diesem Zweck ist eine aus Kunststoff hergestellte Dauerform bekannt, die aus drei Teilen zusammengesetzt ist, einem Bodenteil mit einer mittleren Erhöhung, mit einer in geringem Abstand vom Boden angeordneten Führungsplatte, sowie einer mit dem Boden der Form fest verbundenen Rückwand, einem den Konturen der Form angepaßten Seitenwandteil, der mit einer Leiste nahe seinem Boden in der Schließlage unter die am Boden der Form angeordnete Führungsplatte greifen kann, und einem hinteren der Höhe der Form angepaßten Verriegelungsteil, der den Seitenwandteil in der Lage an der Form verriegeln kann. In den Hohlteil dieser geschlossenen Form wird Gipsmasse eingebracht, welche, wie oben erläutert, dann vor dem Aushärten mit dem noch nicht erhärteten Arbeitsmodell aus Gips vereinigt wird. Nach Erstarren des Gipses wird der Verriegelungsteil abgenommen, der Seitenwandteil, der etwa U-Form hat, nach vorn weggeschoben und dann kann die Kombination aus Gipssockel und Gipsarbeitsmodell von der Form entfernt werden. Nach der Durchführung von Teilarbeiten an dem zersägten Arbeitsmodell, bestehend aus Gipsarbeitsmodell und Sockelteil, müssen die einzelnen Teile der vorgenannten Kombination wieder in die Form eingebracht und durch den Seitenwandteil und durch den hinteren Riegelteil wieder fest gehaltert werden.

- 3 -

Bei der bekannten Form ist das Aufschieben des Wandungsteils auf den Boden der Grundform verhältnismäßig schwierig, da das Arbeitsmodell aus einer Mehrzahl von zersägten Teilen besteht, die in ihrer zusammengebauten Lage ihre frühere Lage genau wieder einnehmen müssen. Hier besteht die Gefahr, daß, wenn nicht sehr sorgfältig gearbeitet wird, Teile des Gipssockels und des Arbeitsmodells beschädigt werden. Außerdem ist die Herstellung solcher Dauerformen vergleichsweise sehr teuer, weil zur Fertigstellung eines solchen Modells mehrere Teilformen mit unterschnittenen Teilen verwendet werden müssen. (US PS 2.911.722).

Ferner ist eine mehrteilige Form für den vorgenannten Zweck bekannt, die aus einem äußeren Formteil und einem Zwischenkörper besteht, wobei an den Seitenwandungen des Formteils und den Seitenwandungen des U-förmigen Zwischenkörpers ineinanderpassende Rippen und Nuten ausgebildet sind, die in dem Formteil und dem Zwischenkörper senkrecht verlaufen. In dem Formteil und in dem Zwischenkörper sind unten schwalbenschwanzförmige Ausnehmungen vorgesehen, in welche zum Haltern des Arbeitsmodells und des Zwischenkörpers Gabelführungen bewegt werden können. Eine solche Ausführung einer mehrteiligen Form ist vergleichsweise kompliziert und verhältnismäßig teuer. Außerdem ist die Halterung des Arbeitsmodells und des Zwischenkörpers in dem Formteil nachteilig, weil die Haltekräfte für das Arbeitsmodell nur über die Wandungen des Zwischenkörpers auf das Arbeitsmodell übertragen werden (US-PS 3.702.027).

Die Aufgabe der Erfindung besteht darin, eine einteilige Form zur Aufnahme von Arbeitsmodellen zur Zahnersatzherstellung zu schaffen, bei der auf einfache Weise rationell und präzise zersägbare Arbeitsmodelle für die Fertigstellung von Zahnprothesen hergestellt und nachfolgend auf einfache Weise in die Form in ihre genaue Lage wieder eingesetzt werden können.

Erreicht wird dies durch eine Form nach den Patentansprüchen.

Durch den zungenartigen Vorsprung an dem einen Retentionsteil wird mit Hilfe dessen von Flanschen eine verbesserte Halterung des Arbeitsmodells erreicht, da diesem auch im inneren Bereich ein ausreichend fester Sitz gegeben wird.

Bei der zweiten Ausführungsform der Erfindung sind die Retentionsteile in Form von Bändern hergestellt, welche Vorsprünge aufweisen. Diese Vorsprünge können durch Ausnehmungen in der Seitenwand hindurch in das Modell hinein eingreifen, wodurch dem Modell eine Sichere Lage gegeben wird. Durch die Anordnung der Vorsprünge in Abstandlage und Versetzung zueinander, wobei die Lücken der seitlichen Abmessung der Vorsprünge entsprechen, kann eine hohe Formstabilität beibehalten werden. Würde man statt der Vielzahl der Vorsprünge nur wenige einzelne Vorsprünge verwenden, so wäre eine entsprechend große Ausnehmung in der Seitenwand der Form erforderlich, so daß diese ihre Formstabilität verliert.

Die Erfindung wird nachstehend anhand der Zeichnung beispielsweise erläutert.

Fig. 1 zeigt eine Draufsicht der Form.

Fig. 2 zeigt eine Querschnittsansicht gemäß II-II der Figur 1.

Fig. 3 zeigte eine Draufsicht auf eine abgewandelte Ausführungsform gemäß der Erfindung.

Fig. 4 zeigt eine vergrößerte Teilschnittansicht gemäß IV-IV nach Fig. 3.

Fig. 5 und 6 zeigen schaubildliche vergrößerte Darstellungen der Retentionsteile.

Mit 10 ist allgemein eine Form bezeichnet, die in Draufsicht bzw. im Querschnitt etwa U-Form hat, deren Schenkel sich nach außen etwas erweitern und dann wieder verjüngen. Die Form 10 weist eine mit 11 bezeichnete Seitenwand auf. Die Seitenwand 11 verläuft vom Boden der Form 10 her nach oben und außen. Die Seitenwand 11 und die Hinterwand 12 sind beispielsweise an ihrem oberen Ende mit einem nach außen gerichteten ringsumlaufenden Führungsflansch 13 versehen, dessen Zweck später erläutert wird. Von dem Boden 14 der Form 10 erstreckt sich im Abstand von der Seitenwand 11 eine ringsumlaufende Rippe 15, die sich nur über einen Teil der Höhe der Form erstreckt, wie aus Fig. 2 ersichtlich ist. Der Wandungsteil 11, ein Teil des Bodens 14 und die Rippe 15 sind an ihren Wandungen mit einer Vielzahl von kleinen Rippen versehen, deren Querschnitt sich vom Boden bzw. von den Wandungen her nach außen verjüngt. Dadurch wird eine Vielzahl von Nuten gebildet, in welche der Gips eintreten kann.

Zum Haltern von zersägten Teilen der Kombination aus Arbeitsmodell und Sockel in der Form 10 sind zwei Retentionsteile in Form einer Spange 19 und eines Verriegelungsteiles 20 vorgesehen. Die Spange 19, deren Formgebung dem sich erweiternden Konturenteil der Form 10 angepaßt ist, ist mit einem sich nach innen erstreckenden Flansch 21 versehen. Ferner ist er im Abstand von dem Flansch 21 mit einem weiteren Flansch 22 versehen, dergestalt, daß die Flanschteile 21 und 22 in der Arbeitslage den an der Form 10 ausgebildeten Führungsflansch 13 oben und unten übergreifen. Die Spange 19 ist an ihren Enden mit je einem sich nach außen erstreckenden Vorsprung 23 in Form eines Rastteils versehen.

Der Verriegelungsteil 20 weist ebenfalls einen nach innen gerichteten Flansch 24 und an der Unterseite einen Flansch 25 im Abstand vom Flansch 24 auf. An den Enden des Verriegelungsteils 20 ist je ein mit 26 bezeichneter Klauenteil vorgesehen, die in der Arbeitslage des Verriegelungsteils 20 die Vorsprünge oder Klauen 23 der

die Vorsprünge oder Klauen 23 der Spange 19 elastisch umgreifen und somit die Retentionsteile 19 und 20 in der Arbeitslage lösbar miteinander verriegeln.

Der Verriegelungsteil 20 ist mit einem zungenartigen
Vorsprung 30 ausgebildet, der in die Mitte der Form hineinragt und ebenfalls mit Flanschen 24 und 25 ausgebildet ist.

Vor der Durchführung von Arbeiten werden die Spange 19
und der Verriegelungsteil 20 an der Form 10 so angebracht,
daß die Retentionsteile sich in der verriegelten Lage befinden. Dann werden in bekannter Weise der vom Zahnarzt
gelieferte Abdruck und die Form 10 mit Gips ausgegossen und,
noch bevor der Gips abgebunden hat, wird das Gipsmodell
auf den Gips in der Form 10 aufgesetzt und der Überschuß
abgestrichen. Nach dem Abbinden und Aushärten des Gipses
wird die Kombination aus Arbeitsmodell und Sockel nach Lösen
der Verriegelung durch Wegnahme des Verriegelungsteils 20
und Wegschieben der Spange 19 herausgedrückt. Das Arbeitsmodell mit dem Sockel kann nun in beliebig viele Teile zersägt werden und die so entstandenen kleinen Modellelemente
können wieder in die Form 10 zurückgesetzt werden. Die präzise Führung der einzelnen Modellteile wird dabei durch die
Nuten 17 in der Mulde der Form 10 gewährleistet und durch
Wiederaufschieben der Spange 19 und des Verriegelungsteiles
20 wird das Ganze unverrückbar arrettiert. Dabei greifen
Teile des Arbeitsmodells unter den Flansch 21 der Spange 19
und den Flansch 24 des Verriegelungsteils 20.

Die Figur 3 zeigt ein abgewandelte Ausführungsform
gemäß der Erfindung. Bei dieser Ausführungsform ist eine
Spange 119 vorgesehen, welche keine Flansche aufweist, sondern
mit einer Vielzahl von Vorsprüngen 120 ausgebildet ist. Diese
Vorsprünge 120 ragen in den Innenraum der Form hinein. Zu
diesem Zweck sind die Seitenwände 111 mit Ausnehmungen ausgebildet, die genau zu den Vorsprüngen 120 passend angeordnet
sind. Die Fig. 4 zeigt in vergrößertem Maßstab die Anordnung
der Stange 119 an der Seitenwand 111, die Fig. 5 und 6 zeigen schaubildlich unterschiedliche Ausführungsformen der Vorsprünge 120 an der Spange 119. Bei Betrachtung der Fig. 4 bis 6 von oben her, ist zu erkennen, daß die einzelnen Vorsprünge 120 in ihrer Höhenlage zueinander versetzt angeordnet sind. Die seitlichen Abmessungen sind so gewählt, daß sie der Lücke zwischen zwei benachbarten Vorsprüngen einer Reihe entsprechen.

0210484-

- 8 -

Patentansprüche

1. Einteilige Form zur Herstellung und Aufnahme eines Kieferabgußarbeitsmodells zur Zahnersatzherstellung unter Verwendung von Retentionsteilen zum Halten des Arbeitsmodells in der Form und Halterippen für das Arbeitsmodell, wobei die Konturen der Form denen eines Arbeitsmodells in etwa angepaßt sind, dadurch gekennzeichnet, daß der eine Halterungsteil (20) mit in den Innenbereich der Form hineinstreckendem zungenartigem Vorsprung (130) mit Flanschen (24, 25) ausgebildet ist.

2. Einteilige Form zur Herstellung und Aufnahme eines Kieferabgußarbeitsmodells zur Zahnersatzherstellung unter Verwendung von Retentionsteilen zum Halten des Arbeitsmodells in der Form und Halterippen für das Arbeitsmodell, wobei die Konturen der Form denen eines Arbeitsmodells in etwa angepaßt sind, dadurch gekennzeichnet, daß die Retentionsteile ( 119) in Form von Bändern mit Vorsprüngen ( 120 ) ausgebildet sind und zu den Vorsprüngen (119) passende Ausnehmungen in der Seitenwand (111) ausgebildet sind.

3. Einteilige Form nach Anspruch 2, dadurch gekennzeichnet, daß die Vorsprünge (119) bei Betrachtung von oben auf Lücke versetzt angeordnet sind, wobei die seitlichen Abmessungen der Vorsprünge (119) den Lücken entsprechen.

Fig. 3

*IV* *IV*

119

Fig. 1

19  10  30  *I*  *I*  26

23  26  20  12  23

*Fig. 2*

19 21 13  20 30 11 24 13 19

22  25

11  15  15  10

*Fig.5*  *Fig.6*

119 120  119 120

119 120

111

*Fig 4*

0210484